# EUROPEAN PATENT SPECIFICATION

(11) **EP 4 561 009 B1**
(45) Date of publication and mention of the grant of the patent: **05.11.2025**
(21) Application number: 23212045.1
(22) Date of filing: 24.11.2023
(51) Int. Cl.: H04W 28/02, H04L 47/31, H04L 47/24, H04L 45/24

(54) **METHODS, COMPUTER PROGRAMS, AND APPARATUSES FOR USER EQUIPMENT AND A CORE NET-WORK COMPONENT AND FOR MANAGING QUALITY OF SERVICE**
VERFAHREN, COMPUTERPROGRAMME UND VORRICHTUNGEN FÜR BENUTZERGERÄT UND EINE KERNNETZ-ARBEITSKOMPONENTE UND ZUR VERWALTUNG DER DIENSTGÜTE
PROCÉDÉS, PROGRAMMES INFORMATIQUES ET APPAREILS POUR ÉQUIPEMENT UTILISATEUR ET COMPOSANT DE RÉSEAU CENTRAL ET POUR GÉRER LA QUALITÉ DE SERVICE

(43) Date of publication of application: 28.05.2025
(73) Proprietor: Deutsche Telekom AG, 53113 Bonn (DE)
(72) Inventor: AMEND, Markus, 63667 Nidda (DE); BAYER, Nico, 61231 Bad Nauheim (DE)
(74) Representative: 2SPL Patentanwälte PartG mbB

(56) References cited:
- WO-A1-2023/287154

## Description

### Field

Examples relate to methods, computer programs, apparatuses for user equipment and for a core network component, and for enabling Quality of Service, QoS, in a multi-path communication session, more particularly, but not exclusively, for enabling different QoS profiles on different sub-paths of a multi-path communication session.

### Background

When transmitting data in communication networks, data rate, error rate and latency are key performance indicators. For example, data of some services may be more delay tolerant than others. Email traffic or web browsing are examples of rather delay-tolerant services. Other data services may be rather delay-intolerant, such as communication-class services as voice and video calls. Similar diversity exists with respect to error tolerance, data rate requirements, etc.

Multi-path communication may provide the benefit of enhanced data rates as multiple, potentially independent, paths are used in a communication session. Using independent paths may provide increased robustness of the communication as an interruption of one path may be compensated by the other and vice versa.

For example, the 3^{rd} Generation Partnership Project (3GPP) specified in their Release 16 a Multi-Access Packet Data Unit (MA-PDU), which enables inclusion of more than one access in the communication between User Equipment (UE) and a 5^{th} Generation (5G) core network. More details can be found in 3GPP Technical Specification (TS) 23.501 V16.17.0 (2023-06) and 3GPP TS 23.502 V16.17.0 (2023-09).

### Summary

Document WO 2023/287154 Al (57) provides a method by which a UE performs communication. The method comprises the steps of: transmitting, to an SMF, a PDU session establishment request message; receiving a PDU session establishment accept message; transmitting a PDU session modification request message; and receiving a PDU session modification command message.

It is a finding of the present disclosure that in multi-path communication, QoS provided on the different paths can vary, e.g. based on different load situations on the different communication paths. For example, in a scenario, in which one of the communication paths gets loaded, QoS criteria or QoS user profiles will determine the traffic distribution on this path just like in a single path communication. However, in a multi-path scenario the other paths will be influenced accordingly since traffic might be offloaded on these paths. It is therefore a finding that QoS profiles should be configured per communication path. When QoS profiles on the different paths can be different, the QoS profiles can be adapted to the natures of the paths.

Examples provide a method for enabling Quality of Service, QoS, in a multi-path communication session between two communication nodes in a communication network. The multi-path communication session comprises at least first and second communication paths. The method comprises configuring a first QoS profile, when setting up the first communication path and configuring a second QoS profile, which is different from the first QoS profile, when setting up the second communication path. Therewith QoS profiles can be adapted to the respective communication paths. This may happen initially or sequentially, e.g. when a path is added to a communication session subsequently, the additional path may have a different QoS profile.

For example, the first and second communication paths use different access technologies in the communication network. Different access technologies may offer different QoS parameters such as data rate, latency, bit error rates, etc. in addition to different load situations. Examples may allow to tune QoS profiles to the access technologies, e.g. to different wireless access technologies such as 3GPP and non-3GPP. Another example is multi-path communication, wherein the first and second communication paths use different protocol tunnels. Such tunnels may be within the same access technology, or they may use different access technologies. Example may allow tuning the QoS profiles to the different tunnels.

The multi-path communication session may be a Multi-Access-Packet Data Unit session, MA-PDU, and the communication network may be a 3rd Generation Partnership Project communication core network. Examples may allow setting or negotiating different QoS profiles for the sub-paths of a MA-PDU session.

The method may further comprise using packet detection rules to detect data packets of the first and second communication paths and associating different QoS enforcement rules for data packets using the first and second communication paths based on the first and second QoS profiles. This may enable efficient implementation of packet splitting or packet scheduling towards the different paths in the multi-path communication session. The method may further comprise filtering data packets using the first and second communication paths using different data packet filters. Such filters may be installed per communication path and enable an efficient packet switching or scheduling between the paths. The data packet filter may enable the QoS profile per path, e.g. per access technology or per protocol tunnel.

For example, the filtering is applied before transmission of the respective data packets. The method may further comprise assigning different QoS profile identifications to filtered data packets using different communication paths. Thereby path specific (e.g. per access technology or per protocol tunnel) QoS profiles can be assigned. In further examples one of the communication nodes is user equipment and another communication node is a core network node. The configuring of the first QoS profile for the first communication path may comprise negotiating the first QoS profile with a management entity for the first communication path during setup of the first communication path. Likewise, the configuring of the second QoS profile for the second communication path may comprise negotiating the second QoS profile with a management entity for the second communication path during setup of the second communication path. Therewith, examples may enable path specific QoS negotiation. For example, the negotiating may include reading a customer profile from a data base, or negotiating between UE and core network.

A (communication) session management function, SMF, may be used in examples for configuring the first and second QoS profiles. The first QoS profile may comprise a first QoS flow identification and the second QoS profile may comprise a second QoS flow identification. The first and second QoS flow identifications may enable efficient QoS profile/flow identification in subsequent packet processing and communication resource assignment on/for the different paths.

Examples also provide a computer program having a program code for performing one of the methods described herein, when the computer program is executed on a computer, a proces-sor, or a programmable hardware component.

Another example is an apparatus for user equipment and for enabling Quality of Service, QoS, in a multi-path communication session between two communication nodes in a communication network. The multi-path communication session comprises at least first and second communication paths in a communication network. The apparatus comprises one or more interfaces configured to communicate in the communication network and one or more processing devices configured to perform one of the methods as described herein. Examples also provide user equipment comprising the apparatus.

Yet another example is an apparatus for a core network component and for enabling Quality of Service, QoS, in a multi-path communication session between two communication nodes in a communication network. The multi-path communication session comprises at least first and second communication paths in a communication network. The apparatus comprises one or more interfaces configured to communicate in the communication network and one or more processing devices configured to perform one of the methods described herein. Examples also provide a core network component comprising the apparatus.

A communication system is another example comprising user equipment with an example of an apparatus as described above, one or more access networks and a core network node with example of an apparatus as described above.

### Brief description of the Figures

Some examples of apparatuses, methods, and/or computer programs will be described in the following by way of example only, and with reference to the accompanying figures, in which
Fig. 1 shows a block diagram of an example of a method for enabling QoS in a multi-path communication session;
Fig. 2 shows block diagrams of examples of an apparatus for user equipment and an apparatus for a core network component;
Fig. 3 shows a block diagram of an example of a MA-PDU session;
Fig. 4 shows throughput charts in an example of an MA-PDU session with concurrent use of a WiFi path;
Fig. 5 illustrates a message sequence chart for a MA-PDU session establishment in a 3GPP network;
Fig. 6 shows an example scenario in a 3GPP communication network; and
Fig. 7 illustrates packet filter logical implementations in examples.

### Detailed Description

Some examples are now described in more detail with reference to the enclosed figures. However, other possible examples are not limited to the features of these examples described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

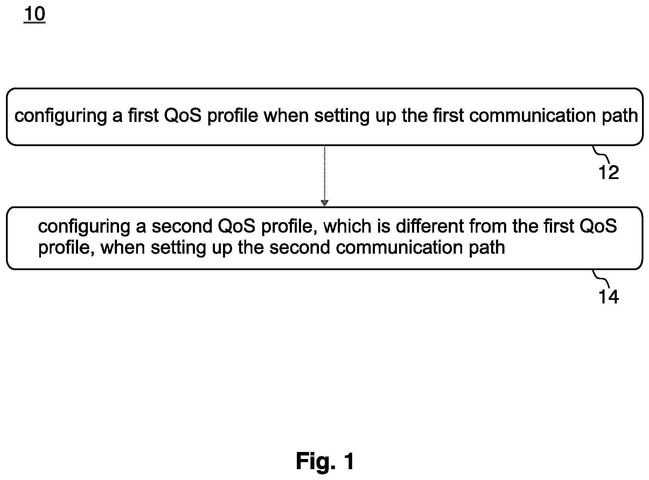

Fig. 1 shows a block diagram of an example of a method 10 for enabling QoS in a multi-path communication session. The multi-path communication session comprises at least first and second communication paths. The method 10 comprises configuring 12 a first QoS profile when setting up the first communication path and configuring 14 a second QoS profile, which is different from the first QoS profile, when setting up the second communication path. In examples, the first and second communication paths may use different access technologies in the communication network, e.g. 3GPP- and non-3GPP-access as will be further detailed in the subsequent examples. Furthermore, the first and second communication paths may use different protocol tunnels, be it on the same or on different access technologies. In some scenarios the first path may be established before the second path, e.g. a multi-path session may be first established based on a single communication path and one or more further paths may be added later. A QoS profile may specify QoS parameters for a path or a service on a path. The QoS parameters may comprise one or more elements of the group of a data rate, a packet latency or delay, a bit error rate, a frame error rate, and a packet error rate.

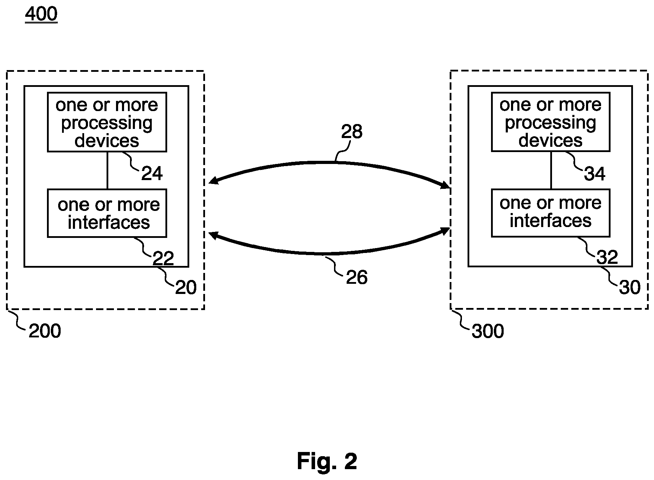

Fig. 2 shows block diagrams of examples of an apparatus 20 for user equipment 200 and an apparatus 30 for a core network component 300. The apparatus 20 for user equipment 200 is configured for enabling Quality of Service, QoS, in a multi-path communication session between two communication nodes in a communication network. The multi-path communication session comprises at least a first communication path 26 and a second communication path 28 in a communication network 400. The apparatus 20 comprises one or more interfaces 22 configured to communicate in the communication network 400 and one or more processing devices 24 configured to perform one of the methods 10 as described herein. User equipment 200, which is shown as optional component in dashed lines, comprising the apparatus 20 is another example.

The apparatus 30 for the core network component 300 is configured to enable Quality of Service, QoS, in a multi-path communication session between two communication nodes in the communication network 400. The multi-path communication session comprises at least a first communication path 26 and a second communication path 28. The apparatus 30 comprises one or more interfaces 32 configured to communicate in the communication network 400. The apparatus 30 further comprises one or more processing devices 34 configured to perform one of the methods 10 as described herein. A core network component 300, which is shown as optional component in broken lines, comprising the apparatus 30 is another example.

Fig. 2 further illustrates an example of a communication system 400 comprising one or more elements of an apparatus 20 for user equipment 200 and an apparatus 30 for a core network component 300.

As illustrated in Fig. 2, the respective one or more processing devices 24, 34 are coupled to one or more interfaces 22, 32. The one or more interfaces 22, 32 may correspond to one or more inputs and/or outputs for receiving and/or transmitting information, which may be in digital (bit) values according to a specified code or protocol, within a module, between modules or between modules of different entities. For example, an interface 22, 32 may comprise interface circuitry configured to receive and/or transmit information. In examples an interface 22, 32 may correspond to any means for obtaining, receiving, transmitting or providing analog or digital signals or information, e.g., any connector, contact, pin, register, input port, output port, conductor, lane, etc., which allows providing or obtaining a signal or information. An interface 22, 32 may be configured to communicate (transmit, receive, or both) in a wireless or wireline manner and it may be configured to communicate, i.e., transmit and/or receive signals, information with further internal or external components. The one or more interfaces 22, 32 may comprise further components to enable communication in a (mobile) communication system or network, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc.

The one or more processing devices 24, 34 may be implemented using one or more processing units, one or more circuitries, any means for processing, such as a processor, a computer or a programmable hardware component being operable with accordingly adapted software. In other words, the described function of the one or more processing devices 24, 34 may as well be implemented in software, which is then executed on one or more programmable hardware components. Such hardware components may comprise a general-purpose processor, a Digital Signal Processor (DSP), a micro-controller, etc.

In the following, a more detailed application of the methods and apparatuses introduced in connection with Figs. 1 to 6 is given.

An example of a multi-path communication session is a Multi-Access PDU (MA-PDU) session, which was first specified in 3GPP Release (Rel) 16 to include more than one access in the communication between User Equipment (UE) and 5G core. In that it differs from the single access PDU session, which is bound to one access at a time. The benefit of an MA-PDU session combining a 3GPP access and a non-3GPP access is the better resilience in case of bottlenecks or interruptions of an access.

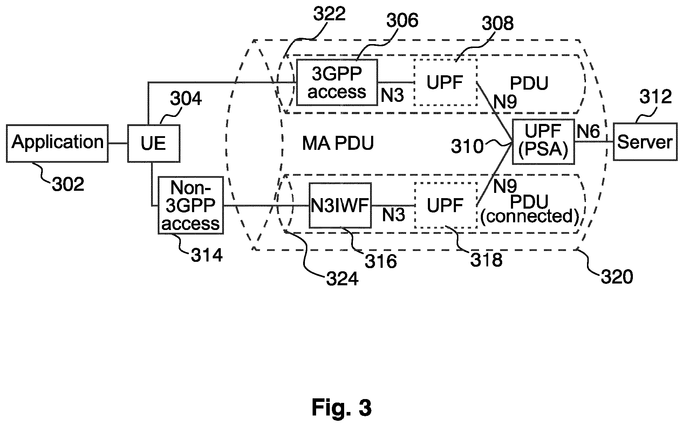

Fig. 3 shows a block diagram of an example of a MA-PDU session. Fig. 3 shows an application 302 being executed on a UE 304 on the very left. From the UE 304 there are two communication paths, a first communication path uses 3GPP access 306 at the top, which optionally connects through interface N3 to User Plane Function (UPF) 308. The 3GPP access 306 offers a Radio Access Network (RAN) and connects to the UPF 308.

The UPF 308 is a component of the core network, e.g. in the New Radio (NR) mobile core infrastructure system as defined by 3GPP. Optionally, the UPF 308 handles the user data. In the signaling plane (not shown in Fig. 3) an Access and Mobility management Function (AMF) accesses the UE and the (R)AN. The reference point between the access 306 and the core network is called "NG". This reference point is constituted of several interfaces, e.g. N3.

More details of the UPF 308 can be found in 3GPP TS 23.501 (e.g V16.17.0 (2023-06)). For example, the UPF 310 provides the interconnect point between the mobile infrastructure and the Data Network (DN, Server 312), i.e. encapsulation and decapsulation of GPRS Tunnelling Protocol for the user plane (GTPU). UPF 308 further provides a Protocol Data Unit (PDU) Session Anchor point (PSA) 310 for enabling mobility within and between Radio Access Technologies (RATs). The UPF (PSA) 310 is the protocol entity relevant for ATSSS as the 3GPP and the non-3GPP paths are terminated. Moreover, it provides per-flow QoS handling, including transport level packet marking for uplink (UL) and downlink (DL), rate limiting and reflective QoS (DiffServ Code Point, DSCP) marking on the DL. UPF (PSA) 310 is also shown in Fig. 3. The interface N9 lies between two UPF's (i.e. an Intermediate UPF 308 and the UPF Session Anchor 310). The UPF (PSA) 310 is then coupled via interface N6 to the server 312.

As further shown in Fig. 3, a second path at the bottom shows a non-3GPP access 314, for example, this may be a wired or a wireless access, e.g. WiFi-access (Wireless Fidelity). On the lower path, the non-3GPP access 314 is coupled to a non-3GPP InterWorking Function (N3IWF) 316. Details on the function of the N3IWF 316 can be found, for example, in 3GPP TS 24.502 V16.10.0 and later versions thereof. The N3IWF 316 enables a UE to establish a secure connection to the 5G core network over untrusted non-3GPP access. Another N3 interface optionally couples to the UPF 318. An N9 interface further couples to the UPF (PSA) 310. Fig. 3 further illustrates the MA-PDU 320 session, which comprises two paths 322 (via 3GPP access) and 324 (via non-3GPP access).

Fig. 3 depicts the principle of a MA-PDU session. Following Section 5.32.2 of TS 23.501 (v16.17.0) the establishment procedure is in large parts similar to the one of a traditional single access PDU session but defines instead the request type of the PDU session to be "MA PDU request" on the 3GPP and non-3GPP access using the same PDU Session ID (IDentification). This procedure is followed by an establishment of two N3/N9 tunnels (322, 324, one per access) within this MA-PDU session, which both can be used for NAS (Non-Access Stratum) communication and routing of traffic towards the N6 interface connecting to the server 312. The tunnels can be distinguished by the definition of the access type (3GPP or non-3GPP) defined during the first step of a PDU session establishment as defined in section 4.3.2.2 of TS 23.502. The usage and traffic distribution of the two tunnels is up to the selected ATSSS (Access Traffic Steering, Switching, and Splitting) steering function (section 5.32.6, TS 23.501) and steering mode (section 5.32.8, TS 23.501).

Similar to a single access PDU session, a MA-PDU session can carry QoS flows, which is further described in section 5.32.4 of TS 23.501 to be access agnostic:
One difference compared to the Single-Access PDU Session is that in a MA-PDU session there can be separate user-plane tunnels between the AN and the PSA, each one associated with a different access. However, the QoS Flow is conventionally not associated with specific access, i.e. it is access agnostic, so the same QoS is supported when the traffic is distributed over 3GPP and non-3GPP accesses. In a conventional system a session management function (SMF) shall provide the same QFI (Quality Flow Indicator) in 3GPP and non-3GPP accesses so that the same QoS is supported in both accesses.

However, this definition does not allow for a multi-access scenario that benefits from access specific QoS. In an enterprise environment where it is known that Wi-Fi only devices (not using the MA-PDU session) require a reliable high-speed connection, these devices will receive high QoS on the Wi-Fi network, while MA-PDU-enabled devices will receive lower QoS because they are able to seamlessly offload traffic to the cellular network.

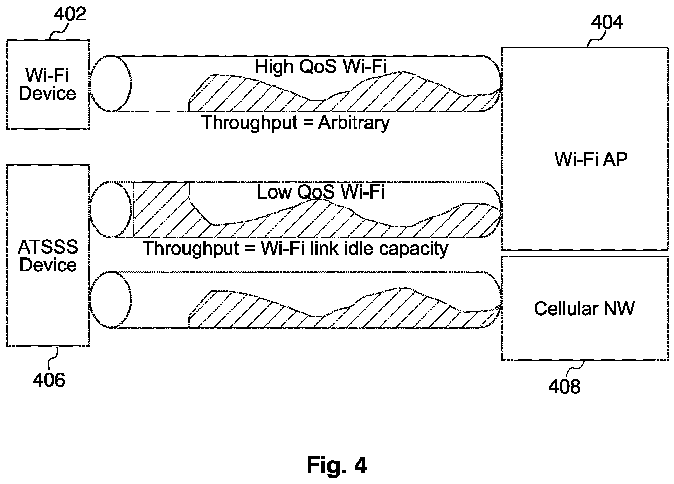

Fig. 4 shows throughput charts in an example of an MA-PDU session with concurrent use of a WiFi path. Fig. 4 illustrates a WiFi device 402 that communicates with a WiFi Access Point (AP) 404. In between the throughput is illustrated and it is assumed that a High QoS Wi-Fi context is established. At the bottom, an ATSSS device 406 is shown that has a MA-PDU session with the WiFi AP 404 and a cellular network 408. In between the two throughputs to the WiFi AP 404 and the cellular network 408 are illustrated. In this example, the multi-path communication session is an MA-PDU session, and the communication network is a 3rd Generation Partnership Project communication core network. For example, one of the communication nodes is user equipment, e.g. the ATSSS device 406.

Fig. 4 shows an ATSSS capable device 406 spanning a MA-PDU session across Wi-Fi and cellular access for traffic splitting and a Wi-Fi device 402 connected over Wi-Fi. In the case of the Wi-Fi device 402, the Wi-Fi QoS is set high and for the ATSSS device 406 low. The effect becomes visible when the ATSSS device 406 starts a transmission in the order of magnitude of the Wi-Fi link capacity and prefers to send the traffic via the Wi-Fi access. This occupies the whole Wi-Fi link until the time when the Wi-Fi device 402 starts a fluctuating transmission. Due to higher QoS, the Wi-Fi device 402 uses the resources of the Wi-Fi arbitrarily, which will lead to a reduced resource availability of the Wi-Fi for the MA-PDU session. Since the ATSSS splitting function can distribute traffic across links, the cellular link is then used to compensate the lower resource availability of the Wi-Fi.

Examples may enable a negotiation of per path, e.g. per access and/or per tunnel, QoS within an MA-PDU session. The configuring 12 of the first QoS profile for the first communication path may then comprise negotiating the first QoS profile with a management entity for the first communication during setup of the first communication path. Alternatively or additionally, the configuring 14 of the second QoS profile for the second communication path comprises negotiating the second QoS profile with a management entity for the second communication during setup of the second communication path.

Examples may use an access specific QoS flow, e.g. different QoS is supported when the traffic is distributed over 3GPP and non-3GPP accesses. Hence, the SMF (Session Management Function) is enabled to provide different QFIs (Quality Flow Indicators) in 3GPP and non-3GPP access so that different QoS treatment can be applied on both accesses.

In an example this may involve the following steps:
- In the downlink direction, the SMF needs to install two different packet detection rules (PDRs) in the UPF for each of the access types 3GPP and non-3GPP. Each PDR is associated with a QoS Enforcement Rule (QER). The QER also contains the QFI value to be added to the GTP-U header. In such an example the method 10 further comprises using packet detection rules to detect data packets of the first and second communication paths, and associating different QoS enforcement rules for data packets using the first and second communication paths based on the first and second QoS profiles.
- In the uplink direction a set of packet filters is installed per 3GPP and non-3GPP access based on the received QER on the terminal. Filter sets are checked in precedence order and when a match is found the packet is assigned a QFI. The method 10 may then comprise filtering data packets using the first and second communication paths using different data packet filters. For example, the filtering is applied before transmission and the method 10 further comprises assigning different QoS profile identifications, e.g. QFIs, to filtered data packets using different communication paths. The SMF may then be used to configure the first and second QoS profiles. The first QoS profile may comprise a first QFI and the second QoS profile may comprise a second QFI.
- When a PDU session is established the SMF retrieves Session Management subscription data from UDM (Unified Data Management) including default QoS values which are used for the QoS flow that the default QoS rule is associated with. As a result of a PDU Session establishment the UE gets a default QoS rule.

In examples, in a typical hybrid access scenario, the 3GPP link is used to extend the throughput of the non-3GPP link. However, to not discriminate regular mobile broadband users within the same cellular network, hybrid access traffic on the 3GPP link is treated with lower priority compared with the mobile broadband traffic. While on the non-3GPP link a default priority is applied. Examples enable different QoS treatment on both accesses/tunnels.

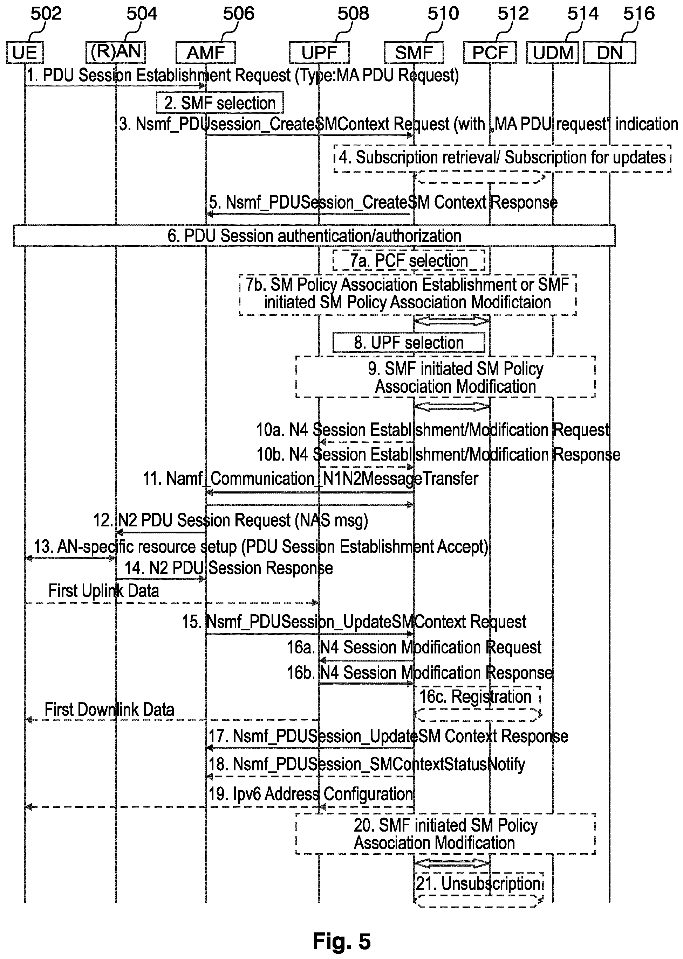

An example of a flow chart is shown in the following. Fig. 5 illustrates a message sequence chart for a MA-PDU session establishment in a 3GPP network. Further details on the respective functions and components that will be introduced below can be found in the 3GPP specifications, particularly, but not exclusively, in TS 23.501 V16.17.0 (2023-06) and 3GPP TS 23.502 V16.17.0 (2023-09).

In Fig. 5 a UE 502 sends in step 1 a PDU Session Establishment Request (MA-PDU Request) to the Access and Mobility Management Function (AMF) 506 via the (Radio) Access Network ((R)AN) 504. AMF 506 is a central functionality in a 5G core network, which handles Non-Access Stratum (NAS) messages from the UE 502. It corresponds to the Mobility Management Entity (MME) in 4^{th} generation networks. Such NAS messages include messages that deal with initial registration of the UE 502, Authentication, Mobility Management, De-registration, etc. The AMF 506 performs SMF (Session Management Function) selection for the MA-PDU session in step 2 and requests the respective SMF 510 to create a corresponding session management context (for the MA-PDU session, Nsmf_PDUSession_CreateSMContext Request (with "MA PDU request" indication)). The SMF 510 then retrieves the user's subscription data from the unified data management entity (UDM) 514 in step 4 (Subscription retrieval/ Subscription for updates) before responding to the AMF 506 with a context response message in step 5 (Nsmf_PDUSession_CreateSMContext Response).

In step 6 PDU Session authentication/authorization has been established for all shown components including the Data Network (DN) 516. The SMF 510 then preforms Policy Control Function (PCF) selection and initiates PCF 512 in step 7a, and SM Policy Association Establishment or SMF initiated SM Policy Association Modification takes place in step 7b. As further shown in Fig. 5 the SMF 510 then selects a User Plane Function (UPF) 508 in step 8 and initiates a SM Policy Association Modification in step 9. In step 10a N4 Session Establishment/Modification Request is sent from the SMF 510 to the UPF 508 and in step 10b the N4 Session Establishment/Modification Response is received at the SMF 510 from the UPF 508. The N4 interface is between the SMF 510 and the UPF 508. Message transfer is then established between the SMF 510 and the AMF 506 in step 11 (Namf_Communication_N1N2MessageTransfer). The AMF 506 then requests an N2 PDU session at the (R)AN 504 (N2 PDU Session Request (NAS msg)) in step 12, which triggers AN-specific resource setup (PDU Session Establishment Accept) in step 13. The (R)AN 504 then responds in step 14 with an N2 PDU Session Response. The N2 interface is between the AMF 506 and the (R)AN 504. First uplink data can then be transmitted from the UE 502 to the UPF 508.

As further shown in Fig. 5, in step 15 the AMF 506 sends a request for a PDU session update to the SMF 510 (Nsmf_PDUSession_UpdateSMContext Request). This triggers an N4 Session Modification Request and an according response between the SMF 510 and the UPF 508 in steps 16a and 16b. Once the response is received at the SMF 510 registration with the DN 516 is established and first downlink data can be transferred by the UPF 508. In step 17 the SMF 510 sends a Nsmf_PDUSession_UpdateSMContext Response to the AMF 506 and in step 18 a notification of the context status (Nsmf_PDUSession_SMContextStatusNotify). In step 19 the IPv6 Address Configuration can be communicated from the SMF 510 to UPF 508 and the UE 502. Step 19 is an optional step required in case of PDU Session Type IPv6 or IPv4v6. As shown in step 20 SMF initiated SM Policy Association Modifications may be distributed. Step 21 outlines the un-subscription procedure.

The signaling flow for a MA PDU Session establishment when the UE is not roaming, or when the UE is roaming and the PDU Session Anchor (PSA) is located in the VPLMN (Visited Public Land Mobile Network), is based on the regular signaling flow as described in 3GPP 23.502, Section 4.3.2 and shown in the respective Figure 4.3.2.2.1-1. In the following only those aspects relevant for a MA-PDU session setup with different QoS profiles per path according to an example are discussed:
- The PDU Session Establishment Request message may be sent over the 3GPP access or over the non-3GPP access. In the steps below, it is assumed that it is sent over the 3GPP access, unless otherwise specified.
- In step 1, the UE 502 provides a Request Type as "MA PDU Request" in an UL NAS Transport message and its ATSSS Capabilities as defined in clause 5.32.2 of TS 23.501 (v16.17.0) in a PDU Session Establishment Request message.
- In step 3, the AMF 506 informs the SMF 510 that the request is for a MA-PDU Session by including "MA PDU Request" indication.
- In step 7, if dynamic PCC (Policy and Charging Control) is to be used for the MA PDU Session, the SMF sends an "MA-PDU Request" indication to the PCF 512 in the SM Policy Control Create message and the ATSSS Capabilities of the MA-PDU session. The SMF 510 provides the currently used Access Type(s) and RAT Type(s) to the PCF 512. The PCF 512 provides PCC rules that include MA-PDU session control information, as specified in 3GPP TS 23.503 V16.14.0 (2023-03). From the received PCC rules, the SMF 510 derives (a) ATSSS rules, which will be sent to UE 502 for controlling the traffic steering, switching and splitting in the uplink direction and (b) N4 rules, which will be sent to UPF 508 for controlling the traffic steering, switching and splitting in the downlink direction.

According to one example, the ATSSS rules as well as the N4 rules include information about the QoS treatment (QoS profiles, QFI) applied on the different paths, e.g. different access technologies or different tunnels. Hence, PCF 512 is able to assign different QoS treatment on the different paths (access technologies and/or tunnels) and thus enforce a different QoS treatment.

One can differentiate between per access or per tunnel when applying different QoS treatment. Per access means that based on the access technology, different QoS can be assigned. This is for instance useful in case different access technologies are used, e.g. 3GPP and non-3GPP. In that case the system needs to maintain and manage different (default) QoS values for the different access technologies. For instance, the UDM 514 needs to keep default QoS values per access technology.

The per tunnel option could be applied in case a MA-PDU session is established over the same access technology. For instance, the terminal does have multiple 3GPP connections at the same time. In that case the system needs to be able to differentiate the two links. This can be done for example based on PLMN-ID (Public Land Mobile Network Identifier), Slice-ID (Identifier), TE-ID (Tunnel Endpoint Identifier) or another ID or by assigning a primary and a secondary link. In all cases the system needs to maintain and manage different QoS values for the different links (paths) via the same access technology. For instance, the UDM needs to keep default QoS values per link.

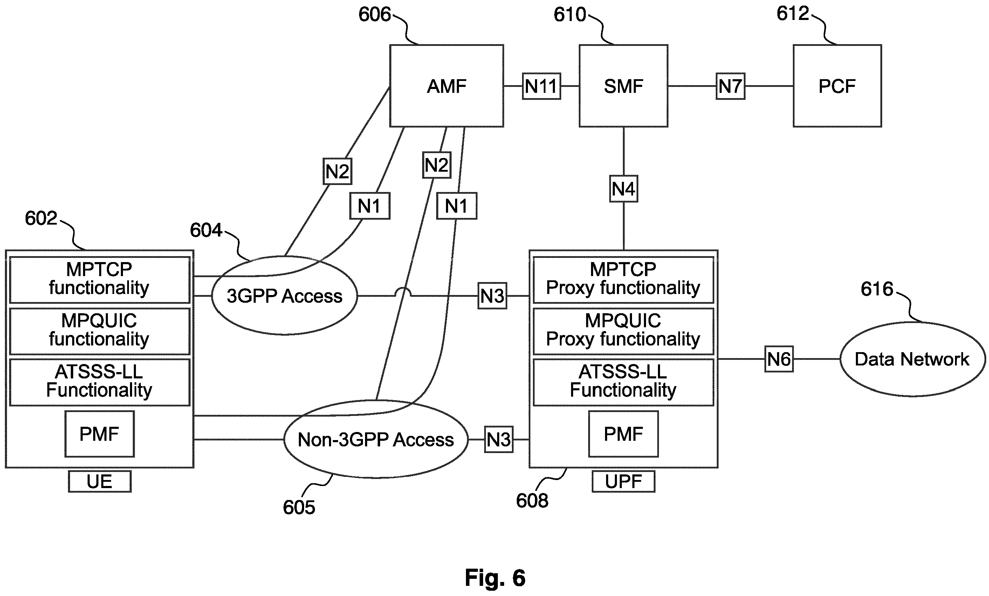

Fig. 6 shows an example scenario in a 3GPP communication network using a schematic block diagram of some of the components of Fig. 5 and the interfaces in between. Fig. 6 depicts a UE 602 with a Performance Measurement Function (PMF), Multi-Path Transmission Control Protocol (MPTCP) functionality, Multi-Path Quick UDP Internet Connection (MP-QUIC) functionality, and ATSSS-LL (ATSSS-Lower Layer). The UE 602 connects to an AMF 606 through a 3GPP access 604 and through a non-3GPP access 605. The access networks 604 and 605 provide N1 interface between the UE 602 and AMF 606 and connect though N2 interfaces to the AMF 606 themselves. The access networks 604 and 605 further provide an N3 interface between the UE 602 and the UPF 608, which has the peer functionalities of the UE 602, i.e. MPTCP, MPQUIC, ATSSS-LL, and PMF. The UPF 608 connects to the data network 616 through the N6 interface. Fig. 6 further illustrates the SMF 610 with the N4-interface to the UPF 608 and the N11-interface to the AMF 606, and an N7-interface to the PCF 612.

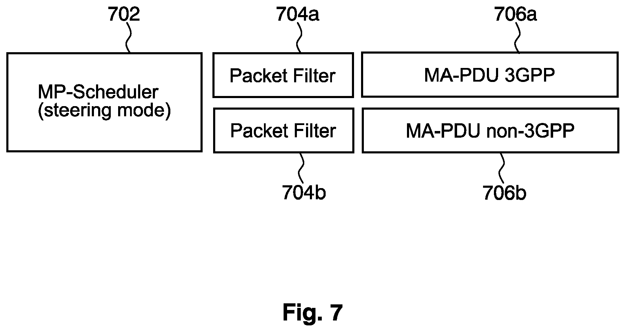

Fig. 7 illustrates a packet filter logical implementation in an example. Fig. 7 shows a Multi-Path scheduler 702, which assigns data packets to the respective communication paths. This may be part of an ATSSS steering mode selection, which may be pre-set for the scheduler 702. In line with 3GPP TS 23.501 V16.17.0 (2023-06), section 5.32.8, ATSSS Rules may be communicated by the SMF.

Each ATSSS rule may contain an Access Selection Descriptor that may contain the following components:
- A Steering Mode, which determines how the traffic of the matching SDF (Service Data Flow) should be distributed across 3GPP and non-3GPP accesses.

The following Steering Modes are supported:
- Active-Standby: It is used to steer an SDF on one access (the Active access), when this access is available, and to switch the SDF to the available other access (the Standby access), when Active access becomes unavailable. When the Active access becomes available again, the SDF is switched back to this access. If the Standby access is not defined, then the SDF is only allowed on the Active access and cannot be transferred on another access.
- Smallest Delay: It is used to steer a SDF to the access that is determined to have the smallest Round-Trip Time (RTT). As defined in clause 5.32.5 of 3GPP TS 23.501 V16.17.0 (2023-06), measurements may be obtained by the UE and UPF to determine the RTT over 3GPP access and over non-3GPP access. In addition, if one access becomes unavailable, all SDF traffic is switched to the other available access. It can only be used for the Non-GBR (Guaranteed Bit Rate) SDF.
- Load-Balancing: It is used to split a SDF across both accesses if both accesses are available. It contains the percentage of the SDF traffic that should be sent over 3GPP access and over non-3GPP access. Load-Balancing is only applicable to Non-GBR SDF. In addition, if one access becomes unavailable, all SDF traffic is switched to the other available access, as if the percentage of the SDF traffic transported via the available access was 100%.
- Priority-based: It is used to steer all the traffic of an SDF to the high priority access, until this access is determined to be congested. In this case, the traffic of the SDF is sent also to the low priority access, i.e. the SDF traffic is split over the two accesses. In addition, when the high priority access becomes unavailable, all SDF traffic is switched to the low priority access. How UE and UPF determine when a congestion occurs on an access is implementation dependent. It can only be used for the Non-GBR SDF.

The ATSSS rule may also contain a Steering Functionality, which identifies whether the MPTCP functionality or the ATSSS-LL functionality should be used to steer the traffic of the matching SDF. This is used when the UE supports multiple functionalities for ATSSS, as specified in clause 5.32.6 ("Support of Steering Functions") in TS 23.501 V16.17.0 (2023-06).

As shown in Fig. 7 two packet filters 704a and 704b are used, which separately filter data packets to be forwarded to 3GPP access 706a and to non-3GPP access 706b, respectively. The packet filters 704a and 704b implement a QoS profiles per access (per tunnel in another example). Hence, the packet filters 704a and 704b prioritize data packets based on their associated QoS profiles, QFI, respectively.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A method (10) for enabling Quality of Service, QoS, in a multi-path communication session between two communication nodes in a communication network (400), the multi-path communication session comprises at least first and second communication paths, the method (10) comprising
configuring (12) a first QoS profile when setting up the first communication path; and
configuring (14) a second QoS profile, which is different from the first QoS profile, when setting up the second communication path,
wherein the first and second QoS profiles specify QoS parameters for a path or a service on a path and wherein the QoS parameters comprise one or more elements of the group of a data rate, a packet latency or delay, a bit error rate, a frame error rate, and a packet error rate.

2. The method (10) of claim 1, wherein the first and second communication paths use different access technologies in the communication network (400).

3. The method (10) of one of the claims 1 or 2, wherein the first and second communication paths use different protocol tunnels.

4. The method (10) of one of the preceding claims, wherein the multi-path communication session is a Multi-Access-Packet Data Unit Session, MA-PDU, and wherein the communication network is a 3^{rd} Generation Partnership Project communication core network.

5. The method (10) of one of the preceding claims, further comprising using packet detection rules to detect data packets of the first and second communication paths, and associating different QoS enforcement rules for data packets using the first and second communication paths based on the first and second QoS profiles.

6. The method (10) of one of the preceding claims, further comprising filtering data packets using the first and second communication paths using different data packet filters.

7. The method (10) of claim 6, wherein the filtering is applied before transmission and wherein the method (10) further comprises assigning different QoS profile identifications to filtered data packets using different communication paths.

8. The method (10) of one of the preceding claims, wherein one of the communication nodes is user equipment (200).

9. The method (10) of one of the preceding claims, wherein the configuring (12) of the first QoS profile for the first communication path comprises negotiating the first QoS profile with a management entity for the first communication path during setup of the first communication path.

10. The method (10) of one of the preceding claims, wherein the configuring (14) of the second QoS profile for the second communication path comprises negotiating the second QoS profile with a management entity for the second communication path during setup of the second communication path.

11. The method (10) of one of the preceding claims, wherein a session management function, SMF, is used for configuring the first and second QoS profiles.

12. The method (10) of claim 11, wherein the first QoS profile comprises a first QoS flow identification and wherein the second QoS profile comprises a second QoS flow identification.

13. A computer program having a program code for performing one of the methods (10) of one of the claims 1 to 12, when the computer program is executed on a computer, a processor, or a programmable hardware component.

14. An apparatus (20) for user equipment (200) and for enabling Quality of Service, QoS, in a multi-path communication session between two communication nodes in a communication network (400), the multi-path communication session comprises at least first and second communication paths in a communication network, the apparatus (20) comprising
one or more interfaces (22) configured to communicate in the communication network (400); and
one or more processing devices (24) configured to perform one of the methods (10) of claims 1 or 12.

15. An apparatus (30) for a core network component (300) and for enabling Quality of Service, QoS, in a multi-path communication session between two communication nodes in a communication network (400), the multi-path communication session comprises at least first and second communication paths in a communication network (400), the apparatus (30) comprising
one or more interfaces (32) configured to communicate in the communication network (400); and
one or more processing devices (34) configured to perform one of the methods (10) of claims 1 or 12.

## Patentansprüche

1. Ein Verfahren (10) zum Ermöglichen der Dienstgüte, QoS, in einer Mehrpfad-Kommunikationssitzung zwischen zwei Kommunikationsknoten in einem Kommunikationsnetzwerk (400), wobei die Mehrpfad-Kommunikationssitzung mindestens einen ersten und einen zweiten Kommunikationspfad umfasst, wobei das Verfahren (10) Folgendes umfasst:
Konfigurieren (12) eines ersten QoS-Profils beim Einrichten des ersten Kommunikationspfads; und
Konfigurieren (14) eines zweiten QoS-Profils, das sich von dem ersten QoS-Profil unterscheidet, beim Einrichten des zweiten Kommunikationspfads,
wobei das erste und das zweite QoS-Profil QoS-Parameter für einen Pfad oder einen Dienst auf einem Pfad spezifizieren und wobei die QoS-Parameter ein oder mehrere Elemente aus der Gruppe einer Datenrate, einer Paketlatenz oder -verzögerung, einer Bitfehlerrate, einer Rahmenfehlerrate und einer Paketfehlerrate umfassen.

2. Das Verfahren (10) gemäß Anspruch 1, wobei der erste und der zweite Kommunikationspfad unterschiedliche Zugangstechnologien in dem Kommunikationsnetzwerk (400) verwenden.

3. Das Verfahren (10) gemäß einem der Ansprüche 1 oder 2, wobei der erste und der zweite Kommunikationspfad unterschiedliche Protokolltunnel verwenden.

4. Das Verfahren (10) gemäß einem der vorhergehenden Ansprüche, wobei die Mehrpfad-Kommunikationssitzung eine Multi-Access-Packet Data Unit-Sitzung, MA-PDU, ist und wobei das Kommunikationsnetzwerk ein 3^{rd} Generation Partnership Project-Kommunikationskernnetzwerk ist.

5. Das Verfahren (10) gemäß einem der vorhergehenden Ansprüche, das ferner ein Verwenden von Paketdetektionsregeln zum Detektieren von Datenpaketen des ersten und des zweiten Kommunikationspfads und ein Zuordnen unterschiedlicher QoS-Durchsetzungsregeln für Datenpakete unter Verwendung des ersten und des zweiten Kommunikationspfads basierend auf dem ersten und dem zweiten QoS-Profil umfasst.

6. Das Verfahren (10) gemäß einem der vorhergehenden Ansprüche, das ferner ein Filtern von Datenpaketen unter Verwendung des ersten und des zweiten Kommunikationspfads unter Verwendung unterschiedlicher Datenpaketfilter umfasst.

7. Das Verfahren (10) gemäß Anspruch 6, wobei das Filtern vor einer Übertragung angewendet wird und wobei das Verfahren (10) ferner ein Zuordnen unterschiedlicher QoS-Profilidentifikationen zu gefilterten Datenpaketen unter Verwendung unterschiedlicher Kommunikationspfade umfasst.

8. Das Verfahren (10) gemäß einem der vorhergehenden Ansprüche, wobei einer der Kommunikationsknoten eine Benutzereinrichtung (200) ist.

9. Das Verfahren (10) gemäß einem der vorhergehenden Ansprüche, wobei das Konfigurieren (12) des ersten QoS-Profils für den ersten Kommunikationspfad ein Verhandeln des ersten QoS-Profils mit einer Verwaltungseinheit für den ersten Kommunikationspfad während einer Einrichtung des ersten Kommunikationspfads umfasst.

10. Das Verfahren (10) gemäß einem der vorhergehenden Ansprüche, wobei das Konfigurieren (14) des zweiten QoS-Profils für den zweiten Kommunikationspfad ein Verhandeln des zweiten QoS-Profils mit einer Verwaltungseinheit für den zweiten Kommunikationspfad während einer Einrichtung des zweiten Kommunikationspfads umfasst.

11. Das Verfahren (10) gemäß einem der vorhergehenden Ansprüche, wobei eine Sitzungsmanagementfunktion, SMF, zum Konfigurieren des ersten und des zweiten QoS-Profils verwendet wird.

12. Das Verfahren (10) gemäß Anspruch 11, wobei das erste QoS-Profil eine erste QoS-Flussidentifikation umfasst und wobei das zweite QoS-Profil eine zweite QoS-Flussidentifikation umfasst.

13. Ein Computerprogramm mit einem Programmcode zum Durchführen eines der Verfahren (10) gemäß einem der Ansprüche 1 bis 12, wenn das Computerprogramm auf einem Computer, einem Prozessor oder einer programmierbaren Hardwarekomponente ausgeführt wird.

14. Eine Vorrichtung (20) für eine Benutzereinrichtung (200) und zum Ermöglichen der Dienstgüte, QoS, in einer Mehrpfad-Kommunikationssitzung zwischen zwei Kommunikationsknoten in einem Kommunikationsnetzwerk (400), wobei die Mehrpfad-Kommunikationssitzung mindestens einen ersten und einen zweiten Kommunikationspfad in einem Kommunikationsnetzwerk umfasst, wobei die Vorrichtung (20) Folgendes umfasst:
eine oder mehrere Schnittstellen (22), die konfiguriert sind, um in dem Kommunikationsnetzwerk (400) zu kommunizieren; und
eine oder mehrere Verarbeitungsvorrichtungen (24), die konfiguriert sind, um eines der Verfahren (10) gemäß Anspruch 1 oder 12 durchzuführen.

15. Eine Vorrichtung (30) für eine Kernnetzwerkkomponente (300) und zum Ermöglichen der Dienstgüte, QoS, in einer Mehrpfad-Kommunikationssitzung zwischen zwei Kommunikationsknoten in einem Kommunikationsnetzwerk (400), wobei die Mehrpfad-Kommunikationssitzung mindestens einen ersten und einen zweiten Kommunikationspfad in einem Kommunikationsnetzwerk (400) umfasst, wobei die Vorrichtung (30) Folgendes umfasst:
eine oder mehrere Schnittstellen (32), die konfiguriert sind, um in dem Kommunikationsnetzwerk (400) zu kommunizieren; und
eine oder mehrere Verarbeitungsvorrichtungen (34), die konfiguriert sind, um eines der Verfahren (10) gemäß Anspruch 1 oder 12 durchzuführen.

## Revendications

1. Procédé (10) pour permettre une qualité de service, QoS, dans une session de communication à trajets multiples entre deux nœuds de communication dans un réseau de communication (400), la session de communication à trajets multiples comprenant au moins des premier et second trajets de communication, le procédé (10) comprenant le fait de
configurer (12) un premier profil de QoS lors de l'établissement du premier trajet de communication ; et
configurer (14) un deuxième profil de QoS, qui est différent du premier profil de QoS, lors de l'établissement du deuxième trajet de communication,
dans lequel les premier et deuxième profils de QoS spécifient des paramètres de QoS pour un trajet ou un service sur un trajet et dans lequel les paramètres de QoS comprennent un ou plusieurs éléments du groupe constitué d'un débit de données, d'une latence ou d'un retard de paquet, d'un taux d'erreur binaire, d'un taux d'erreur de trame et d'un taux d'erreur de paquet.

2. Procédé (10) selon la revendication 1, dans lequel les premier et deuxième trajets de communication utilisent des technologies d'accès différentes dans le réseau de communication (400).

3. Procédé (10) selon l'une des revendications 1 ou 2, dans lequel les premier et deuxième trajets de communication utilisent des tunnels de protocole différents.

4. Procédé (10) selon l'une des revendications précédentes, dans lequel la session de communication à trajets multiples est une session d'unité de données en paquets à accès multiples, MA-PDU, et dans lequel le réseau de communication est un réseau central de communication de projet de partenariat de 3^{e} génération.

5. Procédé (10) selon l'une des revendications précédentes, comprenant en outre le fait d'utiliser des règles de détection de paquets pour détecter des paquets de données des premier et deuxième trajets de communication, et d'associer des règles d'application de QoS différentes pour des paquets de données utilisant les premier et deuxième trajets de communication sur la base des premier et deuxième profils de QoS.

6. Procédé (10) selon l'une des revendications précédentes, comprenant en outre le fait de filtrer des paquets de données utilisant les premier et deuxième trajets de communication en utilisant des filtres de paquets de données différents.

7. Procédé (10) selon la revendication 6, dans lequel le fait de filtrer est appliqué avant la transmission et dans lequel le procédé (10) comprend en outre le fait d'attribuer des identifications de profil de QoS différentes à des paquets de données filtrés utilisant des trajets de communication différents.

8. Procédé (10) selon l'une des revendications précédentes, dans lequel l'un des nœuds de communication est un équipement utilisateur (200).

9. Procédé (10) selon l'une des revendications précédentes, dans lequel le fait de configurer (12) le premier profil de QoS pour le premier trajet de communication comprend le fait de négocier le premier profil de QoS avec une entité de gestion pour le premier trajet de communication pendant l'établissement du premier trajet de communication.

10. Procédé (10) selon l'une des revendications précédentes, dans lequel le fait de configurer (14) le deuxième profil de QoS pour le deuxième trajet de communication comprend le fait de négocier le deuxième profil de QoS avec une entité de gestion pour le deuxième trajet de communication pendant l'établissement du deuxième trajet de communication.

11. Procédé (10) selon l'une des revendications précédentes, dans lequel une fonction de gestion de session, SMF, est utilisée pour configurer les premier et deuxième profils de QoS.

12. Procédé (10) selon la revendication 11, dans lequel le premier profil de QoS comprend une première identification de flux de QoS et dans lequel le deuxième profil de QoS comprend une deuxième identification de flux de QoS.

13. Programme informatique ayant un code de programme pour exécuter l'un des procédés (10) selon l'une des revendications 1 à 12, lorsque le programme informatique est exécuté sur un ordinateur, un processeur ou un composant matériel programmable.

14. Appareil (20) pour un équipement utilisateur (200) et pour permettre une qualité de service, QoS, dans une session de communication à trajets multiples entre deux nœuds de communication dans un réseau de communication (400), la session de communication à trajets multiples comprenant au moins des premier et deuxième trajets de communication dans un réseau de communication, l'appareil (20) comprenant
une ou plusieurs interfaces (22) configurées pour communiquer dans le réseau de communication (400) ; et
un ou plusieurs dispositifs de traitement (24) configurés pour exécuter l'un des procédés (10) selon les revendications 1 ou 12.

15. Appareil (30) pour un composant de réseau central (300) et pour permettre une qualité de service, QoS, dans une session de communication à trajets multiples entre deux nœuds de communication dans un réseau de communication (400), la session de communication à trajets multiples comprenant au moins des premier et deuxième trajets de communication dans un réseau de communication (400), l'appareil (30) comprenant
une ou plusieurs interfaces (32) configurées pour communiquer dans le réseau de communication (400) ; et
un ou plusieurs dispositifs de traitement (34) configurés pour exécuter l'un des procédés (10) selon les revendications 1 ou 12.
